# EUROPEAN PATENT SPECIFICATION

(11) **EP 3 408 934 B1**
(45) Date of publication and mention of the grant of the patent: **04.03.2020**
(21) Application number: 16701823.3
(22) Date of filing: 29.01.2016
(51) Int. Cl.: H02P 27/14, H02M 7/483, H02M 1/32, H02H 7/122

(54) **METHOD AND CONTROL DEVICE FOR CONTROLLING A MODULAR MULTILEVEL CONVERTER**
VERFAHREN UND STEUERGERÄT ZUM ANSTEUERN EINES MODULAREN MEHRSTUFENUMRICHTERS
PROCÉDÉ ET DISPOSITIF DE COMMANDE POUR COMMANDER UN CONVERTISSEUR MULTINIVEAUX MODULAIRE

(43) Date of publication of application: 05.12.2018
(73) Proprietor: ABB Schweiz AG, 5400 Baden (CH)
(72) Inventor: BUCHMANN, Beat, 5415 Nussbaumen (CH); WIDER, Bjoern, 8004 Zürich (CH); HAEDERLI, Christoph, 8047 Zürich (CH); VASILADIOTIS, Michail, 8004 Zurich (CH)
(74) Representative: Kransell & Wennborg KB
(86) International application number: PCT/EP2016/051928
(87) International publication number: WO 2017/129252

(56) References cited:
- WO-A1-2015/110185
- CN-A- 103 248 255
- US-A1- 2005 281 065

## Description

### Technical field

The technology disclosed herein relates generally to the field of high power electronics, and in particular to a method and a control device for controlling a modular multilevel converters.

### Background

The Modular Multilevel Converter (MMC) is a relatively new and promising converter type, usable with medium and high voltage levels as well as high power levels. The MMC comprises a number of identical submodules (also denoted cells) connected in series, forming a so-called converter branch (also denoted arms and/or phase-legs). These branches can be configured in several manners leading to different conversion structures.

The MMC may be protected in different ways. For instance, its submodules may be protected by a pulse blocking protection scheme e.g. in case of an alternating current (AC) single line fault or a direct current (DC) line fault. When detecting a fault, the submodules are protected by rapidly issuing blocking pulses to them. When a submodule is forced to its blocked state, different voltage values can appear at its connection terminals, according to the submodule implementation and the current at the moment of pulse removal (positive or negative).

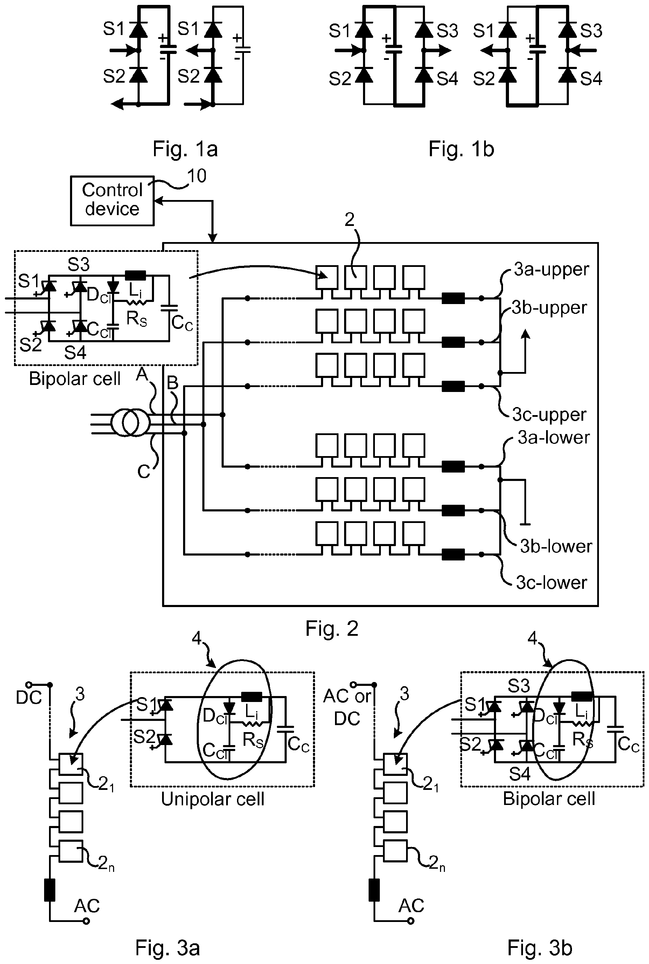

Figure 1a illustrates two different cases when the submodule, being a unipolar submodule, is forced to the blocked state. At the left-hand side, the submodule is blocked such that the current passes through the upper switch S1, while at the right-hand side the submodule is blocked such that the current passes through the lower switch S2.

Figure 1b illustrates two different cases when the submodule, now being exemplified by a bipolar submodule, is forced to the blocked state. At the left-hand side, the submodule is blocked such that the current passes through the upper left-hand switch S1, the capacitor and the lower right-hand switch S₄, while at the right-hand side the submodule is blocked such that the current passes through the upper right-hand switch S3, the capacitor and the lower left-hand switch S2.

When blocking the submodules in the converter branch the instantaneous addition of the voltages across the converter branch terminals may occur (with the exception of unipolar submodules with negative current polarity leading to a short-circuit instead), which in turn can cause overvoltages in a system comprising the MMC. Such overvoltages can damage equipment either on the system side or on the MMC side.

The International application WO 2015/110185-A1 discloses a multilevel converter converting between AC and DC, and comprising a control unit with an AC fault handling element configured to detect an AC bus fault on the AC side of the converter. If a fault occurs, then the AC fault handling element blocks all cell switches of the multilevel converter.

### Summary

The invention is defined in the independent claims. Advantageous embodiments are set out in the dependent claims. An objective of the invention is to solve or at least alleviate the above mentioned problem. It is a particular objective of the invention to reduce overvoltages at pulse blocking protection.

The objective is according to an aspect achieved by a method of controlling a modular multilevel converter comprising a number of series-connected submodules in at least one first branch and at least one second branch. The method is performed in a control device and comprises:
- detecting a fault condition, and
- applying, in response to the detecting, a pulse blocking procedure for protecting the modular multilevel converter, wherein the pulse blocking procedure comprises issuing a pulse blocking signal to at least one subset of all submodules.

The method brings about several advantages. For instance, the method reduces overvoltages appearing when a fault is detected and a pulse blocking procedure is initiated. Thereby the method reduces the risk of system-related damages occurring. The method enables an active control of the trade-off between a desired current reduction and the overvoltages.

The objective is according to an aspect achieved by a computer program for a control device for controlling a modular multilevel converter. The computer program comprises computer program code, which, when executed on at least one processor on the control device causes the control device to perform the method as above.

The objective is according to an aspect achieved by a computer program product comprising a computer program as above and a computer readable means on which the computer program is stored.

The objective is according to an aspect achieved by a control device for controlling a modular multilevel converter comprising a number of series-connected submodules in at least one first branch and at least one second branch. The control device is configured to:
- detect a fault condition, and
- apply, in response to the detecting, a pulse blocking procedure for protecting the modular multilevel converter, wherein the pulse blocking procedure comprises issuing a pulse blocking signal to a subset of all submodules.

Advantages corresponding to the earlier mentioned advantages for the method are obtained also for the control device, computer program and computer program product.

Further features and advantages of the present teachings will become clear upon reading the following description and the accompanying drawings.

### Brief description of the drawings

Figures 1a and 1b illustrate different MMC submodule types in blocked state.
Figure 2 illustrates a modular multilevel converter for which embodiments of the present invention may be implemented.
Figures 3a and 3b illustrate schematically different types of submodules that may be used in the modular multilevel converter of figure 2.
Figure 4 illustrates simulation results for converter voltages during pulse removal.
Figure 5 illustrates simulation results showing effects of sequential pulse blocking according to the invention.
Figure 6 illustrates railway-side converter voltage and current trajectories with and without an active selection mechanism according to the invention.
Figure 7 illustrates an equivalent circuit during an asymmetric short circuiting.
Figure 8 illustrates simulations results for asymmetric short circuiting for a single-to-three-phase direct AC/AC MMC.
Figure 9 illustrates simulations results for railway-side converter voltages and currents during asymmetric short circuiting.
Figure 10 illustrates a flow chart over steps of a method in a control device in accordance with the present invention.
Figure 11 illustrates schematically a control device for implementing methods of the present invention.

### Detailed description

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

In order to provide thorough understanding of the present invention and for sake of completeness some basic description of the MMC is given initially.

Figure 2 illustrates schematically a modular multilevel converter 1 for which embodiments of the present teachings may be implemented. The MMC 1 may, for instance, be connected to a grid and to railway interties. The MMC 1 comprises a number of so-called branches (sometimes denoted arms and/or limbs and/or phase-legs): three upper branches 3_{a_u,} 3_{b_u}, 3_{c_u} and three lower branches 3_{a_l}, 3_{b_l}, 3_{c_l}. As a note on vocabulary: "upper" and "lower" branches are conventionally used in relation to some MMC topologies, but the invention is applicable to any type of MMC. In the following, the wording "upper" and "lower" are used without loss of generality.

Each branch 3_{a_u}, 3_{b_u}, 3_{c_u}, 3_{a_l}, 3_{b_l}, 3_{c_l} comprises a number of identical cells 2₁,..., 2ₙ, also denoted submodules, connected in series. These cells are typically identical, but may, in some embodiments, be of different types. For instance, a combination of unipolar cell and bipolar cells. The branches can be configured in several different manners leading to dedicated conversion structures. According to whether this branch needs to provide positive or positive and negative voltages, the submodule 2₁,..., 2ₙ can be implemented by means of a half-bridge (see figure 2a) or a full-bridge (see figure 2b), respectively.

The illustrated MMC 1 is a three-phase MMC, each phase A, B, C comprising a respective upper branch 3_{a_u}, 3_{b_u}, 3_{c_u} and lower branch 3_{a_l}, 3_{b_l}, 3_{c_l}. For instance, phase A comprise an upper branch indicated at reference numeral 3_{a_u} and a lower branch indicated at reference numeral 3_{a_l}. The upper and lower branches of a phase typically have the same number of submodules. It is however noted that another number of branches (and phases) is possible.

The MMC 1 is controlled by means of a converter control device 10. The control device 10 may, for instance, comprise an integrated circuit, in particular a Field Programmable Gate Array (FPGA) comprising an array of programmable logic blocks. In other embodiments, the control device 10 comprises a processor 11. The control device 10 may comprise an interface, e.g. implemented by FPGA. The interface enables the control device 10 to communicate with each submodule of the MMC 1 and each submodule is also individually controllable. To this end, each submodule also comprises an interface towards the converter control device 10, the interface being implemented e.g. by use of FPGA. As a particular example, the communication between the submodules and the converter control device 10 may be performed over optical fibers, and the interface may, for instance, comprise a fiber optic connector. The control device 10 may receive information from the submodules, e.g. about their capacitor voltages, and perform various algorithms based thereon and then send control signals to the submodules and hence controlling the MMC 1. The control signals may, for instance, comprise switching signals for switching the submodules between their different switching states (described below) thereby controls the voltage of the MMC 1. Different modulation methods may be applied, e.g. pulse width modulation. The control device 10 issues switching signals (modulation signals) to each of the submodules so as to create a desired voltage output. To this end, the number of inserted submodules (i.e. number of submodules in state ON) in the branches is controlled.

Figures 3a and 3b illustrate schematically different types of submodules that may be used in the MMC 1. Depending on type of submodules, different possible voltage levels is obtained at the terminals of the sub-module. Each submodule 2₁,..., 2ₙ may, as illustrated in figure 3a, be a half-bridge type of submodule, also denoted unipolar cell. The half-bridge submodule comprises two switching devices S1, S2 (half-bridge) with respective anti-parallel diodes, and a capacitor C_{c}. The switching devices S1, S2 may, for instance, be implemented as insulated-gate bipolar transistor (IGBT) switches. In normal operation, at any instant one of the switches S1, S2 is switched ON by the switching signals from the control device 10, giving the submodule 21,..., 2ₙ the output voltage V_{c}, i.e. the voltage of the capacitor C_{c} or output voltage o (zero). When the submodule voltage is the output voltage V_{c} it is said to be in the "ON" state (also denoted inserted state) and when it is zero, it is said to be "OFF" (also denoted bypassed state). The submodule may also be in a blocked state, in which all switching devices are off and the current can only conduct through the freewheeling diodes. The control device 10 may issue a pulse blocking signal whereby the submodules are set in the blocked state.

The submodule 2₁,..., 2ₙ may, as mentioned above, also be in a blocked state, e.g. in case of over current, wherein both switching devices S1, S2 are switched off (by the switching signals from the control device 10) and the current can only conduct through the freewheeling diodes. The capacitor will charge if the current is positive but ideally it cannot discharge. The blocking voltage in each phase may be twice the DC voltage.

As another example, illustrated in figure 3b, each submodule 2₁,..., 2ₙ may be a full-bridge type of submodule, also denoted bipolar cell. The full-bridge submodule comprises four switching devices S1, S2, S3, S4, a (anti-parallel) diode and a capacitor Cc. Each switching device S1, S2, S3, S4 may, for instance, comprise an IGBT.

Figures 3a and 3b also illustrate that the submodules 2₁,..., 2ₙ may comprise a clamping circuit 4. The clamping circuit 4 may be used for clamping transient voltages, and to limit fault current during DC short-circuit fault.

Each submodule 2₁,..., 2ₙ may also comprise, although not explicitly illustrated, a bypass switch for short-circuiting the submodule 2₁,..., 2ₙ. Such bypass switch may, for instance, comprise a relay.

As indicated earlier, the submodules 2₁,..., 2ₙ and also the bypass switches may be controlled by the control device 10. To this end, the submodules 2₁,..., 2ₙ and the bypass switches comprises an interface for receiving control signals (pulse blocking signals, switching signals for changing state of the submodules and bypass switches, etc.) from the control device 10.

Briefly, in contrast to prior art wherein the blocking is done simultaneously for all submodules, the invention provides, in various embodiments, a method using a different approach that involves strategies as to when to block submodules and also, in some embodiments, which submodules to block.

From the background section it is clear that the MMC 1 might face a condition, where all switching signals have to be set simultaneously to zero (submodules set in blocked state) for protection reasons. This will lead to a turn-off of the switches S1, S2, S3, S4 in all converter cells, with the purpose of decreasing the current down to zero in all converter branches and as fast as possible. This has to be performed in cases where overvoltage or overcurrent conditions might be harmful for the power converter elements, e.g., might threaten the safe operating area (SOA) of the switches Si, S2, S3, S4.

In the following, a single-to-three-phase direct AC/AC MMC will be used as an application example, mainly because it combines the worst cases in which the above-described effect can be observed and therefore be most harmful. Such a converter, illustrated in and described with reference to figure 2, is commonly used for railway interties, i.e., the interconnection of the three-phase 50 Hz grid with the single-phase 16.7 Hz railway supply.

Two particular cases can be distinguished:
1. Pulse removal when the currents in the two branches of the same phase have the same sign.
2. Pulse removal when the currents in the branches of the same phase are of opposite signs.

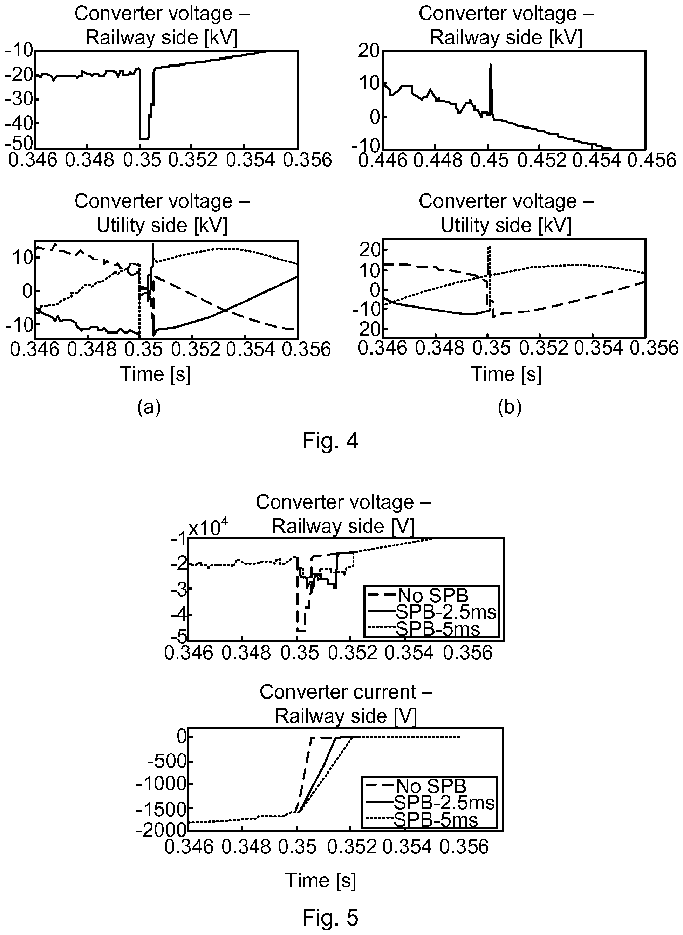

Figure 4 illustrates the results for the above two cases, in particular the railway and utility-side converter voltages during the event of pulse removal when the currents in the branches of the same phase are of (a) equal signs, and (b) opposite signs. In the upper graphs the converter voltage on the railway side is shown as function of time, and in the lower graphs the converter voltage on the utility side is shown as function of time.

In the first case, illustrated at the two graphs on the left-hand side, the two branches of the same phase will apply the full voltage at their terminals with the same polarity (negative in this example). On the level of the railway network, the series connection of these voltages will lead to an overvoltage until the respective current is driven to zero and therefore the submodule diodes become blocked again. The overvoltage is even worse taking into account the control voltage and overvoltage reserves in the submodule as well as the turn-off overvoltage of the semiconductors, e.g., when the submodule is implemented using integrated gate-commutated thyristor (IGCTs).

In the second case, illustrated at the two graphs on the left-hand side, the two branches of the same phase have current signs that are opposite at the instant of the pulse removal (i.e. at the application of the pulse blocking protection), however, opposite voltage polarities will be applied at the two branch terminals of the same phase. Therefore, the overvoltage will mostly appear at the three-phase terminals (utility side) instead.

Such overvoltages are unacceptable and solutions involving surge arresters, circuit breakers etc. are therefore often used. However, this entails increased costs and the invention provides instead methods for controlling the MMC 1 in an improved way. In one aspect, overvoltages during a pulse blocking protection are avoided by using a sequential pulse blocking method. In another aspect, overvoltages during a pulse blocking protection are avoided by using an active selection mechanism.

The sequential pulse blocking concept according to the invention issues pulse blocking signals to the submodules of a branch in a sequential manner rather than doing so simultaneously as in prior art. Or equivalently, the firing pulses to the submodules are removed sequentially or the submodules are bypassed sequentially. This can be implemented in different ways, giving various embodiments of the invention.

In an embodiment, after detecting a need for a pulse blocking signal to be issued (e.g. due to a fault being detected), the switching signals within a converter branch can be released according to a counter with a certain increase rate. The increase rate may be seen as the time elapsed between no submodule being blocked and all submodules being blocked. Further, the increase rate may be pre-configured or it may be determined in real-time during operation. The counter value defines the number of submodules to switch off and the counter interval speed defines how fast a new counter state is reached. The counter values as well as the counter interval speed can be chosen freely, and can be a pre-configured value or determined in real-time, as for the increase rate. Generally, the selection of counter value and counter interval speed can depend on the operating point of the system at hand. The counter value may, for instance, be selected in accordance with a real-time algorithm (i.e. a set of instructions) relating the estimated amount of expected overvoltage to the expected effect on the branch current and submodule capacitor voltage. In this embodiment, the submodules are blocked (i.e. bypassed) one submodule at a time. In other embodiments, a group of submodules may be blocked one at a time, wherein each group comprises two or more submodules.

Figure 5 illustrates simulation results showing effects of sequential pulse blocking according to the invention. For the studied example, the transitions between the blocking states are equal, i.e. the time elapsed between one counter state and a next is constant. However, it is noted that in other embodiments, the transitions between the blocking states may be set in any desired manner. For instance, a first time period may be set between a first and a second counter states, and a second time period (different than the first time period) may be set between the second counter state and a third counter state. The time period may, for instance, be progressively shortened so that the last time period (time period from almost all submodule being blocked to all submodules indeed being blocked) is the shortest.

In particular, the results of using such different counter increase rates of a counter are shown, where the pulse blocking signal is applied at t = 0.35 s. The upper graph shows the converter voltage at the railway side, and as can be seen, the voltage (indicated by dashed line) is the highest if not using the sequential pulse blocking according to the invention. Applying the sequential pulse blocking with 2.5 ms between the first submodule (or group of submodules) being blocked until all are blocked, shows (indicated by solid line) a lower overvoltage at the railway side. The same is true when applying the sequential pulse blocking with 5 ms counter increase rate (indicated by dotted line). The lower graph shows correspondingly the converter current at the railway side. As can be seen, applying the sequential pulse blocking also means that it takes a bit longer to reach a zero current. The sequential pulse blocking method according to the invention thus blocks the MMC 1 somewhat slower than prior art, but also reduces the overvoltages that are created compared to prior art.

The sequential pulse blocking procedure aims at getting the MMC 1 operating point back to a desired operating area. Once back in the operating area, no more submodules need to be blocked. In view of this, and in some embodiments, stepwise limits may be introduced on how many submodules to block, wherein the final limit is blocking all submodules.

During any kind of converter turn-off, a path should be provided for the energy stored in the system reactors. Because of the system physics, the energy may be naturally transferred to the individual submodules, causing a submodule capacitor charging. In view of behavior of the individual submodule capacitor voltages, test results showed that an incremental capacitor charging occurred. This is dependent on several parameters, such as inductance and capacitance values, value of current at the moment of turn-off, as well as number of submodules per converter branch.

It is noted that not only the increase rate (which may be seen as a counter speed) of the implemented counter, but also which specific submodules are selected to be blocked during the sequential pulse blocking process play a significant role in avoiding the overvoltage. The selection of which submodules to block, i.e. in which order to block them, will change the voltage and current trajectory in the converter branches and is therefore considered, according to one aspect of the invention.

During pulse blocking, the submodules, when comprising bipolar cells, will be driven to a state where either positive or negative voltage will be applied at their terminals. When the submodules comprises unipolar cells, the voltage at their terminals will be zero (diode forward voltage drop) or a voltage of a given polarity. This voltage is necessary in order to bring the current towards zero. The impact of the different submodule states, however, is not the same on an instantaneous basis, i.e., when the disclosed sequential pulse blocking is utilized. For example, if a submodule's state is '1' ("ON") and the current in the branch is positive, the voltage at its terminals will not change during a pulse removal. However, if it is in a 'o' state ("OFF"), the forward-biasing of the diode will apply either the positive or the negative cell capacitor voltage to its terminal according to the current polarity.

In view of the above, in some embodiments, an active selection mechanism is introduced. This can be implemented as a simple algorithm, i.e. sequence of instructions, in the control device 10 based on which submodules are inserted (i or - 1) or bypassed (o) during the pulse removal. The submodules that have an impact on the branch voltage (and will therefore try to block the current) are selected first and the rest of the submodules are selected on a later stage.

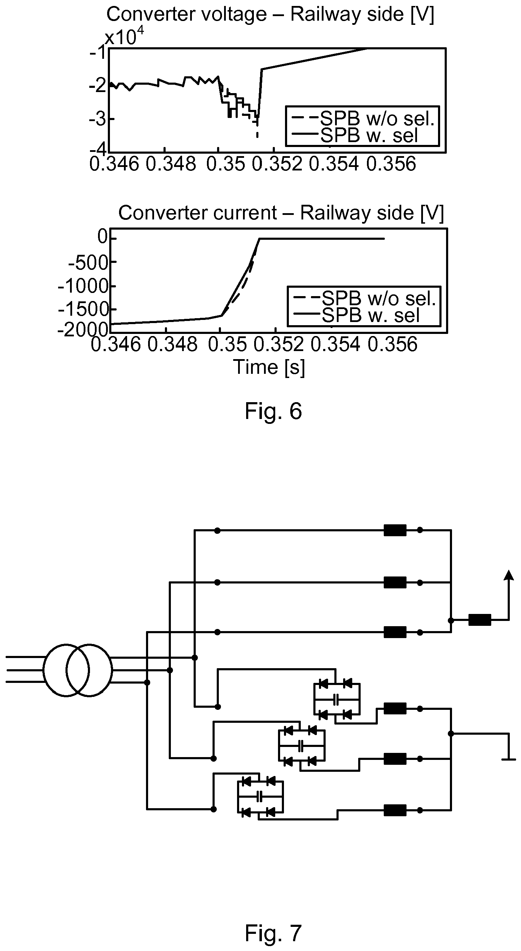

Figure 6 illustrates railway-side converter voltage and current trajectories with and without the described active selection mechanism. It is clear that such an active selection mechanism results in more desirable voltage and current trajectories, even though the time intervals between initial and final conditions are the same.

In an aspect, the overvoltages towards either the single-phase or the three-phase grid are reduced by an asymmetric short circuiting.

Figure 7 illustrates an equivalent circuit during such an asymmetric short circuiting. As shown in the figure, the upper three branches are short-circuited while the pulse blocking signals are applied to the lower three branches. Assuming a relatively high impedance path formed by the three-phase grid, transformer as well as branch inductances, a three-phase side short-circuit can be deliberately imposed by controlling all submodules in the three upper converter branches to zero, i.e. applying the zero vector simultaneously to all submodules. At the same time, all three lower converter branches can be turned-off simultaneously according to the described pulse blocking procedure. The lower branches are modeled using only one equivalent submodule, but is intended to illustrate the series connection of all blocked cells in the specific branch.

The resulting three-phase short-circuit current may be handled by an external mechanism, e.g. an AC-side circuit breaker. At the same time, the overvoltage, which will appear at the single-phase side, will be given by the series connection of voltages in only one (lower) branch instead of two. This would be the typical case without asymmetric short circuiting. The resulting overvoltage will thus be drastically reduced and equipment overload can be avoided.

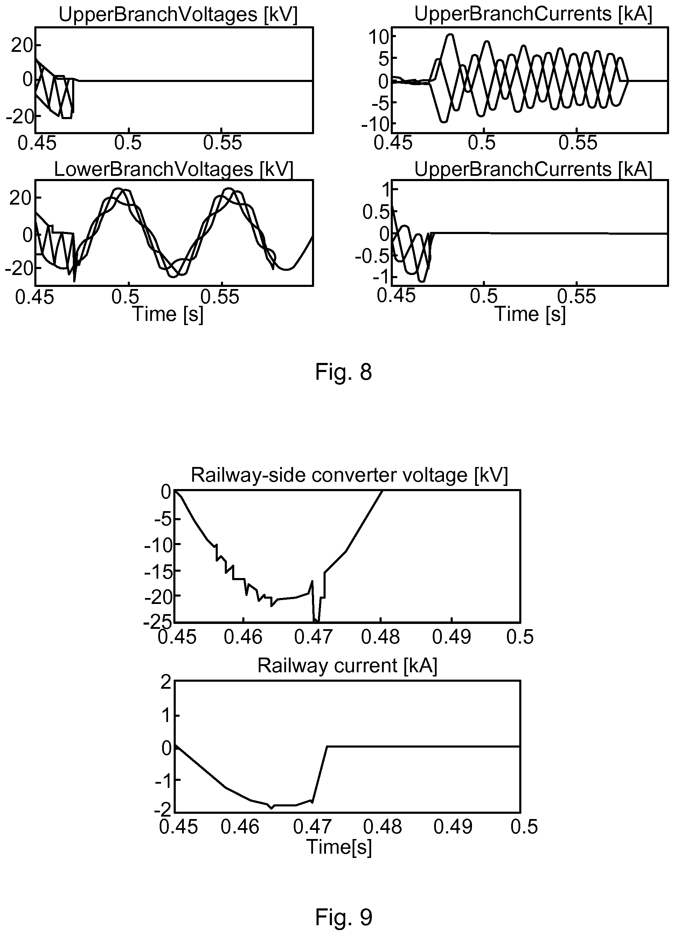

Figure 8 illustrates simulations results for asymmetric short circuiting for a single-to-three-phase direct AC/AC MMC. That is, figure 8 shows the respective results of the above mentioned embodiments. More specifically and at t = 0.47 s the three upper branches of the MMC 1 are short-circuited with the three-phase grid by actively applying the zero vector on all submodules. This will induce a typically-shaped three-phase asymmetric short-circuit current, which is driven to zero when a circuit breaker opens after 100 ms, i.e., at t = 0.57 s. At the same time the lower branches are turned-off simultaneously, something that drives the respective currents to zero in the fastest possible manner. Even when the circuit breaker is open, the system does not need to shut down. When the circuit breaker is open and all submodule currents are below a given threshold, the MMC 1 can resume operation on the grid side that is not disconnected by the circuit breaker. Active current can be drawn from that grid in order to cover converter losses. It is then possible to re-synchronize the voltages on the open circuit breaker with appropriate control of the converter. When these voltage are re-synchronized, the circuit breaker can be closed again and normal operation can be resumed.

Figure 9 illustrates simulation results for railway-side converter voltages and currents during asymmetric short circuiting. As expected, only a very small amount of overvoltage will appear due to the series connection of voltages of the submodules in the lower branches. Further, simulation results also showed that the individual cell capacitor voltages of the zero vector-controlled submodules in the upper branches will not experience any voltage difference. On the other hand, the submodule capacitors of the lower branches, which are turned-off, will be charged with a value corresponding to the energy stored in the reactors at the time of pulse removal (blocking).

It is noted that in order to reduce the railway side voltage even further, the lower converter branches can be even turned-off using the sequential pulse blocking concept described earlier, giving further embodiments.

The method, provided in various embodiments, is transparent and can be used in various MMC-based topologies, for instance, MMC-based STATCOMs in either delta or star configuration, MMC-based BESS converters, DC/AC MMCs, direct single-to-three-phase or three-to-three-phase AC/AC MMCs, and isolated DC/DC MMCs. Moreover and importantly, the protective functions are not compromised and no significant assumptions are made. In addition, the method allows for protection of the system without the need of installing any extra voltage limiting elements, as they are based on existing hardware and only minor software modifications.

The features and embodiments that have been described may be combined in different ways, examples of which are given in the following.

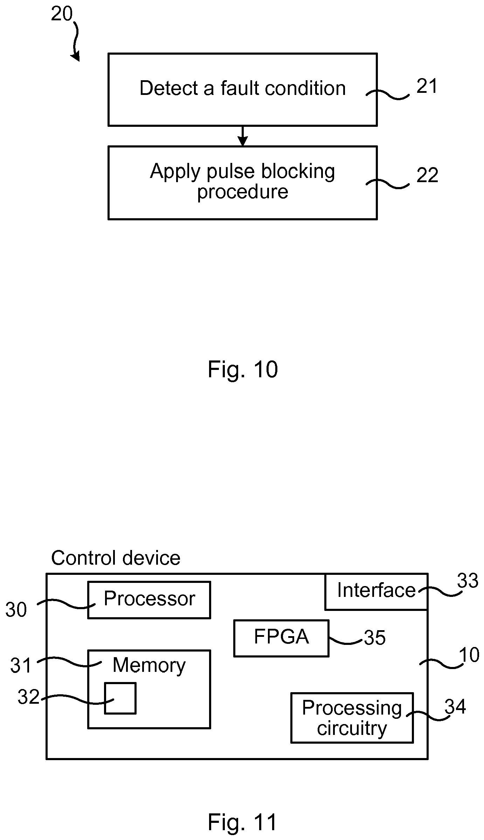

Figure 10 illustrates a flow chart over steps of a method in a control device in accordance with the present invention.

A method 20 of controlling a modular multilevel converter 1 is provided. The modular multilevel converter 1 comprises a number of series-connected submodules 2₁,..., 2ₙ in at least one first branch 3_{a_u}, 3_{b_u}, 3_{c_u} (also denoted upper branch herein) and at least one second branch 3_{a_l}, 3_{b_l}, 3_{c_l} (also denoted lower branch herein). For instance, the modular multilevel converter 1 may comprise a set of first branches (e.g. three upper branches) and a set of second branches (e.g. three lower branches), wherein one such first branch and one such second branch forms one phase. For the particular example of three upper branches and three lower branches the modular multilevel converter 1 would be a three phase converter. It is however noted that the invention may be applied to modular multilevel converters having a different number of phases.

The method 20 is performed in a control device 10. The method 20 comprises detecting 21 a fault condition. Such detection may, for instance, comprise detecting the occurrence of a DC line fault.

The method 20 comprises applying 22, in response to the detecting, a pulse blocking procedure for protecting the modular multilevel converter 1, wherein the pulse blocking procedure comprises issuing a pulse blocking signal to at least one subset of all submodules 2₁,..., 2ₙ. One submodule after another may be blocked, or a group of submodules may be blocked one after another, in a sequential manner. By not blocking all submodules at once, as is done in prior art, a lower overvoltage results, at the cost of a slightly longer time to drive the current to zero. The method 20 reduces the risk of system-related damages occurring. The method enables an active control of the trade-off between a desired current reduction and the overvoltages. For instance, if the current should be driven to zero fast, then large groups of submodules could be blocked sequentially.

In an embodiment, the pulse blocking procedure comprises issuing in a sequential manner a respective pulse blocking signal to each of two or more subsets of all submodules, issuing at least a first pulse blocking signal to a first subset and a second pulse blocking signal to a second subset.

In variations of the above embodiment, the method 20 comprises issuing the at least first and second pulse blocking signals with a set time interval between them.

In some embodiments, the pulse blocking procedure comprises using a selected order in which to issue the pulse blocking signals to the at least one subset of submodules 2₁,..., 2ₙ.

In variations of the above embodiment, the selected order is based on prioritizing blocking of submodules 2₁,..., 2ₙ having highest impact towards lowering a voltage on the at least one first branch 3_{a_u}, 3_{b_u}, 3_{c_u} and/or the at least one second branch 3_{a_l}, 3_{b_l}, 3_{c_l}.

In various embodiments, the method 20 comprises short-circuiting the at least one first branch 3_{a_u}, 3_{b_u}, 3_{c_u}, while applying the pulse blocking procedure to the at least one second branch 3_{a_l}, 3_{b_l}, 3_{c_l}. Such short-circuiting may, as has been described, be done by actively applying a zero vector on all submodules 2₁,..., 2ₙ.

In variations of the above embodiment, the pulse blocking procedure comprises applying a simultaneous pulse blocking signal to all submodules 2₁,..., 2ₙ of the at least one second branch 3_{a_l}, 3_{b_l}, 3_{c_l}. For instance, the modular multilevel converter 1 may, as has been described, comprise a set of first branches and a set of second branches. The pulse blocking signal may then be applied simultaneously to all branches of the set of second branches. Various embodiments are conceivable. The blocking may comprise blocking only some submodules in only one branch of the set of second branches, or all submodules in such branch, or some submodules of one or more branches of the set of second branches, or all submodules of all branches of the set of second branches, etc. The blocking may be simultaneous or in a defined order, as has been described. In still various variations of the above two set of embodiments the pulse blocking procedure comprises evaluating whether a safe operation point has been reached and in case of a safe operation point being reached ending the pulse blocking procedure. The modular multilevel converter 1 may then be re-synchronized with the disconnected grid and the circuit breaker(s) be reclosed.

In various embodiments, the pulse blocking procedure comprises a step of evaluating whether a safe operation point has been reached and if so ending the pulse blocking procedure. It may not always be necessary to block all submodules of the modular multilevel converter 1, and the modular multilevel converter 1 may then be put in full operation faster.

In various embodiments, each subset comprises one submodule 2₁,..., 2ₙ. One submodule 2₁,..., 2ₙ at a time may, in some embodiments, be turned off.

Figure 11 illustrates schematically a control device 10 for implementing embodiments of the present invention. The control device 10 may comprise a processor 30 comprising any combination of one or more of a central processing unit (CPU), multiprocessor, microcontroller, digital signal processor (DSP), application specific integrated circuit etc. capable of executing software instructions stored in a memory 31 which can thus be a computer program product. The processor 30 of the control device 10 can be configured to execute any of the various embodiments of the method 20 as have been described, for instance as described in relation to figure 10.

The memory 31 can be any combination of read and write memory (RAM) and read only memory (ROM), Flash memory, magnetic tape, Compact Disc (CD)-ROM, digital versatile disc (DVD), Blu-ray disc etc. The memory 31 may also comprise persistent storage, which, for example, can be any single one or combination of magnetic memory, optical memory, solid state memory or even remotely mounted memory.

The control device 10 may, in other embodiments, be implemented as an integrated circuit, such as a FGPA 35. The FPGA 35 may comprise one or more programmable logic blocks, each logic block configured to perform a certain function and together executing any of the various embodiments of the method 20 as have been described, for instance as described in relation to figure 10. In still other embodiments, the control device 10 may be implemented by application specific integrated circuits (ASICs).

The control device 10 comprises an interface 33 for controlling the modular multilevel converter 1, e.g. by issuing control signals to the submodules thereof. The interface 33 may, for instance, comprise a connector for optical fiber communication.

The control device 10 may comprise additional processing circuitry, schematically indicated at reference numerals 34, for implementing the various embodiments according to the present invention.

The invention also encompasses a computer program 32 for control device 10. The computer program 32 comprises computer program code, which, when executed on at least one processor on the control device 10 causes the control device 10 to perform the method 20 according to any of the described embodiments.

The invention also encompasses a computer program product 31 comprising a computer program 32 for implementing the embodiments of the method as described, and a computer readable means on which the computer program 32 is stored. The computer program product, or the memory, thus comprises instructions executable by the processor 30. Such instructions may be comprised in a computer program, or in one or more software modules or function modules. Such function modules can be implemented using software instructions such as computer program executing in a processor and/or using hardware, such as application specific integrated circuits (ASICs), field programmable gate arrays, discrete logical components etc., and any combination thereof. Processing circuitry may be provided, which may be adaptable and in particular adapted to perform any of the steps of the method 20 that has been described.

A control device 10 is provided for controlling a modular multilevel converter 1 comprising a number of series-connected submodules 2₁,..., 2ₙ in at least one first branch 3_{a_u}, 3_{b_u}, 3_{c_u} and at least one second branch 3_{a_l}, 3_{b_l}, 3_{c_l}. The control device 10 is configured to:
- detect a fault condition, and
- apply, in response to the detecting, a pulse blocking procedure for protecting the modular multilevel converter 1, wherein the pulse blocking procedure comprises issuing a pulse blocking signal to a subset of all submodules.

The control device 10 may be configured to perform the above steps e.g. by comprising one or more processors 30 and memory 31, the memory 31 containing instructions executable by the processor 30, whereby the control device 10 is operative to perform the steps. In other embodiments, the control device is configured to perform the above steps by comprising or being implemented as FPGA.

In a variation of the above embodiment, the pulse blocking procedure comprises issuing in a sequential manner a respective pulse blocking signal to each of two or more subsets of all submodules, issuing at least a first pulse blocking signal to a first subset and a second pulse blocking signal to a second subset.

In a variation of the above embodiment, the control device 10 is configured to issue at least first and second pulse blocking signals with a set time interval between them.

In various embodiments, the pulse blocking procedure comprises using a selected order in which to issue the pulse blocking signals to the at least one subset of submodules 2. The control device 10 may thus be configured to execute the pulse blocking procedure comprises using a selected order in which to issue the pulse blocking signals to the at least one subset of submodules 2.

In a variation of the above embodiment, the selected order is based on prioritizing blocking of submodules 2₁,..., 2ₙ having highest impact towards lowering a voltage on the at least one first branch 3_{a_u}, 3_{b_u}, 3_{c_u} and/or the at least one second branch 3_{a_l}, 3_{b_l}, 3_{c_l}.

In various embodiments, the control device 10 is configured to short-circuit the at least one first branch (3_{a_u}, 3_{b_u}, 3_{c_u}), while applying the pulse blocking procedure to the at least one second branch (3_{a_l}, 3_{b_l}, 3_{c_l}).

In variations of the above embodiment, the pulse blocking procedure comprises applying a simultaneous pulse blocking signal to all submodules 2₁,..., 2ₙ of the at least one second branch 3_{a_l}, 3_{b_l}, 3_{c_l}. The control device 10 is configured to apply the pulse blocking procedure, and hence configured to, in this embodiment, apply a simultaneous pulse blocking signal to all submodules 2₁,..., 2ₙ of the at least one second branch 3_{a_l}, 3_{b_l}, 3_{c_l}. This was described and exemplified with reference to the corresponding step of the corresponding method, and is applicable also here but not repeated.

In still various variations of the above two set of embodiments the pulse blocking procedure comprises evaluating whether a safe operation point has been reached and in case of a safe operation point being reached ending the pulse blocking procedure. The control device 10 is configured to apply the pulse blocking procedure, and hence configured to, in this embodiment, to evaluate whether a safe operation point has been reached and in case of a safe operation point being reached configured to end the pulse blocking procedure. The control device 10 may then also be configured to resynchronize the modular multilevel converter 1 with the disconnected grid and to reclose the circuit breaker(s).

In various embodiments, the control device 10 is configured to evaluate whether a safe operation point has been reached and upon reaching the safe operation point ending the pulse blocking procedure.

In various embodiments, the control device 10 is implemented as a field-programmable gate array, FPGA.

In summary, the invention solves the problem of protection-triggered pulse blocking in MMCs, i.e., converters where a number of branches can be interconnected in several configurations and within which a series connection of identical submodules takes place. In an event of pulse blocking, such a series connection of the submodules gives rise to added individual voltages, which can in turn cause significant overvoltages and therefore serious converter or system-related damages. The problem is solved by sequential pulse blocking as well as by an asymmetric short circuiting concept, or combinations thereof.

In the case of the sequential pulse blocking, the submodules in a branch are blocked in a sequential manner rather than a simultaneous one. In this way, a trade-off between the current decrease and the system overvoltage is met and can therefore be actively controlled in a very fast way, i.e., on a low hardware level such as in a field programmable gate array (FPGA). The invention thus provides, in different embodiments, a strategy to block the submodules that reduces the overvoltage, at the cost of longer time to drive the current to zero or a safe operating point.

In the asymmetric short circuiting concept, the upper converter branches are actively short-circuited by means of the zero vector, letting the three-phase side circuit breaker open and thus handle the high short-circuit current. At the same time the lower branches will be turned off, applying therefore the minimum amount of series-connected voltage to the common terminals.

The invention has mainly been described herein with reference to a few embodiments. However, as is appreciated by a person skilled in the art, other embodiments than the particular ones disclosed herein are equally possible within the scope of the invention, as defined by the appended patent claims.

## Claims

1. A method (20) of controlling a modular multilevel converter (1) comprising a number of series-connected submodules (2₁,..., 2ₙ) in at least one first branch (3_{a_u}, 3_{b_u}, 3_{c_u}) and at least one second branch (3_{a_l}, 3_{b_l}, 3_{c_l}), the method (20) being performed in a control device (10) and comprising:
- detecting (21) a fault condition, and
- applying (22), in response to the detecting, a pulse blocking procedure for protecting the modular multilevel converter (1), wherein the pulse blocking procedure comprises issuing pulse blocking signals to the submodules (2₁,..., 2ₙ) in a sequential manner.

2. The method (20) as claimed in claim 1, wherein the pulse blocking procedure comprises issuing in a sequential manner a respective pulse blocking signal to each of two or more subsets of all submodules, issuing at least a first pulse blocking signal to a first subset and a second pulse blocking signal to a second subset.

3. The method (20) as claimed in claim 2, wherein the at least first and second pulse blocking signals are issued with a configurable time interval between them.

4. The method (20) as claimed in any of the preceding claims, wherein the pulse blocking procedure comprises using a selected order in which to issue the pulse blocking signals to the at least one subset of submodules (2₁,..., 2ₙ).

5. The method (20) as claimed in claim 4, wherein the selected order is based on prioritizing blocking of submodules (2₁,..., 2ₙ) having highest impact towards lowering a voltage on the at least one first branch (3_{a_u}, 3_{b_u}, 3_{c_u}) and/or the at least one second branch (3_{a_l}, 3_{b_l}, 3_{c_l}).

6. The method (20) as claimed in any of the preceding claims, comprising short-circuiting the at least one first branch (3_{a_u}, 3_{b_u}, 3_{c_u}), while applying the pulse blocking procedure to the at least one second branch (3_{a_l}, 3_{b_l}, 3_{c_l}).

7. The method (20) as claimed in claim 6, wherein the pulse blocking procedure comprises applying a simultaneous pulse blocking signal to all submodules (2₁,..., 2ₙ) of the a least second branch (3_{a_l}, 3_{b_l}, 3_{c_l}).

8. The method (20) as claimed in claim 6 or 7, wherein the pulse blocking procedure comprises evaluating whether a safe operation point has been reached and in case of a safe operation point being reached ending the pulse blocking procedure.

9. The method (20) as claimed in any of the preceding claims, wherein the pulse blocking procedure comprises a step of evaluating whether a safe operation point has been reached and if so ending the pulse blocking procedure.

10. The method (20) as claimed in any of the preceding claims, wherein each subset comprises one submodule (2₁,..., 2ₙ).

11. A computer program (32) for a control device (10) for controlling a modular multilevel converter (1), the computer program (32) comprising computer program code, which, when executed on at least one processor on the control device (10) causes the control device (10) to perform the method (20) according to any one of claims 1-10.

12. A computer program product (31) comprising a computer program (32) as claimed in claim 11 and a computer readable means on which the computer program (32) is stored.

13. A control device (10) for controlling a modular multilevel converter (1) comprising a number of series-connected submodules (2₁,..., 2ₙ) in at least one first branch (3_{a_u}, 3_{b_u}, 3_{c_u}) and at least one second branch (3_{a_l}, 3_{b_l}, 3_{c_l}), the control device (10) being configured to:
- detect a fault condition, and
- apply, in response to the detecting, a pulse blocking procedure for protecting the modular multilevel converter (1), wherein the pulse blocking procedure comprises issuing pulse blocking signals to the submodules in a sequential manner.

14. The control device (10) as claimed in claim 13, implemented as a field programmable gate array.

## Patentansprüche

1. Verfahren (20) zum Ansteuern eines modularen Mehrstufenumrichters (1), der eine Anzahl von in Reihe geschalteten Submodulen (2₁, ..., 2ₙ) in mindestens einem ersten Zweig (3_{a_u}, 3_{b_u}, 3_{c_u}) und mindestens einem zweiten Zweig (3_{a_l}, 3_{b_l}, 3_{c}_ₗ) umfasst, wobei das Verfahren (20) in einem Steuergerät (10) durchgeführt wird und Folgendes umfasst:
- Erkennen (21) eines Fehlerzustands, und
- Anwenden (22), als Reaktion auf das Erkennen, eines Impulssperrverfahrens zum Schutz des modularen Mehrstufenumrichters (1), wobei das Impulssperrverfahren das Ausgeben von Impulssperrsignalen in sequentieller Weise an die Submodule (2₁, ..., 2ₙ) umfasst.

2. Verfahren (20) nach Anspruch 1, wobei das Impulssperrverfahren das Ausgeben eines jeweiligen Impulssperrsignals in sequentieller Weise an jede von zwei oder mehr Untergruppen aller Submodule, das Ausgeben mindestens eines ersten Impulssperrsignals an eine erste Untergruppe und eines zweiten Impulssperrsignals an eine zweite Untergruppe umfasst.

3. Verfahren (20) nach Anspruch 2, wobei die mindestens ersten und zweiten Impulssperrsignale mit einem auslegbaren Zeitintervall zwischen ihnen ausgegeben werden.

4. Verfahren (20) nach einem der vorhergehenden Ansprüche, wobei das Impulssperrverfahren das Verwenden einer ausgewählten Reihenfolge umfasst, in der die Impulssperrsignale an die mindestens eine Untergruppe von Submodulen (2₁, ..., 2ₙ) ausgegeben werden.

5. Verfahren (20) nach Anspruch 4, wobei die ausgewählte Reihenfolge auf der Priorisierung der Sperrung von Submodulen (2₁, ..., 2ₙ) mit der höchsten Auswirkung auf die Senkung einer Spannung am mindestens einen ersten Zweig (3_{a_u}, 3_{b_u}, 3_{c}_ᵤ) und/oder dem mindestens einen zweiten Zweig (3_{a_1}, 3_{b_l}, 3_{c_l}) basiert.

6. Verfahren (20) nach einem der vorhergehenden Ansprüche, umfassend das Kurzschließen des mindestens einen ersten Zweigs (3_{a_u}, 3_{b_u}, 3_{c_u}), während das Impulssperrverfahren auf den mindestens einen zweiten Zweig (3_{a_1}, 3_{b_l}, 3_{c_l}) angewendet wird.

7. Verfahren (20) nach Anspruch 6, wobei das Impulssperrverfahren das Anlegen eines gleichzeitigen Impulssperrsignals an alle Submodule (2₁, ..., 2ₙ) des mindestens einen zweiten Zweigs (3_{a_1}, 3_{b_l}, 3_{c_l}) umfasst.

8. Verfahren (20) nach Anspruch 6 oder 7, wobei das Impulssperrverfahren das Bewerten, ob ein sicherer Betriebspunkt erreicht ist, und im Falle des Erreichens eines sicheren Betriebspunkts das Beenden des Impulssperrverfahrens umfasst.

9. Verfahren (20) nach einem der vorhergehenden Ansprüche, wobei das Impulssperrverfahren einen Schritt des Bewertens, ob ein sicherer Betriebspunkt erreicht ist, und, wenn dies der Fall ist, das Beenden des Impulssperrverfahrens umfasst.

10. Verfahren (20) nach einem der vorhergehenden Ansprüche, wobei jede Untergruppe ein Submodul (2₁, ..., 2ₙ) umfasst.

11. Computerprogramm (32) für ein Steuergerät (10) zum Ansteuern eines modularen Mehrstufenumrichters (1), wobei das Computerprogramm (32) Computerprogrammcode umfasst, der, wenn er auf mindestens einem Prozessor auf dem Steuergerät (10) ausgeführt wird, das Steuergerät (10) veranlasst, das Verfahren (20) gemäß einem der Ansprüche 1-10 durchzuführen.

12. Computerprogrammprodukt (31), umfassend ein Computerprogramm (32) nach Anspruch 11 und ein computerlesbares Mittel, auf dem das Computerprogramm (32) gespeichert ist.

13. Steuergerät (10) zum Ansteuern eines modularen Mehrstufenumrichters (1), umfassend eine Anzahl von in Reihe geschalteten Submodulen (2₁, ..., 2ₙ) in mindestens einem ersten Zweig (3_{a_u}, 3_{b_u}, 3_{c_u}) und mindestens einem zweiten Zweig (3_{a_l}, 3_{b_l}, 3_{c_l}), wobei das Steuergerät (10) für Folgendes ausgelegt ist:
- Erkennen eines Fehlerzustands, und
- Anwenden, als Reaktion auf das Erkennen, eines Impulssperrverfahrens zum Schutz des modularen Mehrstufenumrichters (1), wobei das Impulssperrverfahren das Ausgeben von Impulssperrsignalen in sequentieller Weise an die Submodule umfasst.

14. Steuergerät (10) nach Anspruch 13, implementiert als feldprogrammierbares Gate-Array.

## Revendications

1. Procédé (20) pour commander un convertisseur modulaire multiniveaux (1) comprenant un certain nombre de sous-modules (2₁, ..., 2ₙ) connectés en série dans au moins une première branche (3_{a_u}, 3_{b_u}, 3_{c_u}) et au moins une deuxième branche (3_{a_l}, 3_{b_l}, 3_{c_l}), le procédé (20) étant mis en œuvre dans un dispositif de commande (10) et comprenant :
- la détection (21) d'un état de panne, et
- l'application (22), en réponse à la détection, d'une procédure de blocage d'impulsions pour protéger le convertisseur modulaire multiniveaux (1), dans lequel la procédure de blocage d'impulsions comprend la délivrance de manière séquentielle de signaux de blocage d'impulsions aux sous-modules (2₁, ..., 2ₙ).

2. Procédé (20) selon la revendication 1, dans lequel la procédure de blocage d'impulsions comprend la délivrance de manière séquentielle d'un signal de blocage d'impulsions respectif à chacun de deux sous-ensembles ou plus de tous les sous-modules, et la délivrance d'au moins un premier signal de blocage d'impulsions à un premier sous-ensemble et d'un deuxième signal de blocage d'impulsions à un deuxième sous-ensemble.

3. Procédé (20) selon la revendication 2, dans lequel lesdits au moins premier et deuxième signaux de blocage d'impulsions sont délivrés avec un intervalle de temps configurable entre eux.

4. Procédé (20) selon l'une quelconque des revendications précédentes, dans lequel la procédure de blocage d'impulsions comprend l'utilisation d'un ordre sélectionné dans lequel on délivre les signaux de blocage d'impulsions audit au moins un sous-ensemble de sous-modules (2₁, ..., 2ₙ).

5. Procédé (20) selon la revendication 4, dans lequel l'ordre sélectionné est basé sur la priorisation du blocage de sous-modules (2₁, ..., 2ₙ) ayant l'impact le plus élevé pour abaisser une tension sur ladite au moins une première branche (3_{a_u}, 3_{b_u}, 3_{c_u}) et/ou ladite au moins une deuxième branche (3_{a_1}, 3_{b_l}, 3_{c_l}).

6. Procédé (20) selon l'une quelconque des revendications précédentes, comprenant le court-circuitage de ladite au moins une première branche (3_{a_u}, 3_{b_u}, 3_{c_u}), tout en appliquant la procédure de blocage d'impulsions à ladite au moins une deuxième branche (3_{a_1}, 3_{b_l}, 3_{c_l}).

7. Procédé (20) selon la revendication 6, dans lequel la procédure de blocage d'impulsions comprend l'application d'un signal de blocage d'impulsions simultané à tous les sous-modules (2₁, ..., 2ₙ) de ladite au moins une deuxième branche (3_{a_1}, 3_{b_l}, 3_{c_l}).

8. Procédé (20) selon la revendication 6 ou 7, dans lequel la procédure de blocage d'impulsions comprend l'évaluation du fait de savoir si un point de fonctionnement sûr a été atteint et, dans le cas où un point de fonctionnement sûr est atteint, l'interruption de la procédure de blocage d'impulsions.

9. Procédé (20) selon l'une quelconque des revendications précédentes, dans lequel la procédure de blocage d'impulsions comprend une étape d'évaluation du fait de savoir si un point de fonctionnement sûr a été atteint et, si tel est le cas, d'interruption de la procédure de blocage d'impulsions.

10. Procédé (20) selon l'une quelconque des revendications précédentes, dans lequel chaque sous-ensemble comprend un sous-module (2₁, ..., 2ₙ).

11. Programme informatique (32) destiné à un dispositif de commande (10) pour commander un convertisseur modulaire multiniveaux (1), le programme informatique (32) comprenant un code de programme informatique qui, lorsqu'il est exécuté sur au moins un processeur du dispositif de commande (10), amène le dispositif de commande (10) à mettre en œuvre le procédé (20) selon l'une quelconque des revendications 1 à 10.

12. Produit de programme informatique (31) comprenant un programme informatique (32) selon la revendication 11 et un moyen lisible par ordinateur sur lequel est stocké le programme informatique (32).

13. Dispositif de commande (10) pour commander un convertisseur modulaire multiniveaux (1) comprenant un certain nombre de sous-modules (2₁, ..., 2ₙ) connectés en série dans au moins une première branche (3_{a_u}, 3_{b_u}, 3_{c_u}) et au moins une deuxième branche (3_{a_l}, 3_{b_l}, 3_{c_l}), le dispositif de commande (10) étant configuré pour :
- détecter une condition de défaut, et
- appliquer, en réponse à la détection, une procédure de blocage d'impulsions pour protéger le convertisseur modulaire multiniveaux (1), dans lequel la procédure de blocage d'impulsions comprend la délivrance de manière séquentielle de signaux de blocage d'impulsions aux sous-modules.

14. Dispositif de commande (10) selon la revendication 13, réalisé sous la forme d'un réseau de portes programmables par l'utilisateur.
